# EUROPEAN PATENT SPECIFICATION

(11) **EP 2 262 166 B1**
(45) Date of publication and mention of the grant of the patent: **08.01.2014**
(21) Application number: 09731694.7
(22) Date of filing: 17.04.2009
(51) Int. Cl.: H04L 12/14

(54) **Method, system and apparatus for realizing combined charging service**
Verfahren, System und Vorrichtung zur Ausführung eines kombinierten Vergebührungsdienstes
Procédé, système et appareil pour fournir un service de facturation combiné

(30) Priority: 17.04.2008 CN 200810104360
(43) Date of publication of application: 15.12.2010
(73) Proprietor: Huawei Technologies Co., Ltd., Longgang District, Shenzhen Guangdong 518129 (CN)
(72) Inventor: SHENG, Jinwen c/o Huawei Technologies Co., Ltd. Int.Prop.Dept., Shenzhen (CN)
(74) Representative: Kreuz, Georg Maria
(86) International application number: PCT/CN2009/071339
(87) International publication number: WO 2009/127162

(56) References cited:
- CN-A- 1 946 024
- CN-A- 101 075 886
- CN-A- 101 272 258
- US-A1- 2004 117 311
- US-A1- 2006 253 896

## Description

### FIELD OF THE TECHNOLOGY

The present invention relates to the field of telecommunications technologies, and more particularly to a method, a system, and an apparatus for realizing a composite charging service.

### BACKGROUND OF THE INVENTION

Service combination is one of the hot spots in the current IT industry. Due to the limit of existing technologies, the service combination remains on the level of the combination of services having "small granularity" or the combination of services having low complexity, that is, the effect and possibility of the service combination largely depend on the "granularity" of the composite services, and only the sufficiently detailed and service-oriented components, or services without association can be well combined. It is of no doubt that the application scope of the service combination is limited, and the costs required by the service combination are also increased.

For example, in the field of telecommunications services, a "charging process" is an event that is usually coupled. Under the conditions of the conventional technology, when it is necessary to combine features of multiple services to provide a new service, a method that new features are directly added to the original services is adopted. In the "close coupling" processing mode, the original services need to be directly modified each time, and the services cannot be reused.

In addition, in the conventional technology, the service combination may also be realized based on workflows, and specifically, two existing services are combined through a workflow system to provide a new service. Since charging feature coupling is carried out between the two existing services, it is necessary to split the existing services into at least three services, so as to separate the coupled charging service as an independent service. Finally, the three separated services are combined through the workflows to provide a brand-new composite service, and to solve the problem of charging coupling. The above solution is intended to realize the service combination based on "small granularity" through workflows and provide a new service. However, in the solution, the existing services need to be modified greatly, and at least the charging service in the original services needs to be separated.

United States Patent Application 20040117311 discloses an apparatus, methods and computer programs for metering and accounting for services accessed over a network. The method comprises the following steps: a requested composite service invoking a set of component services as required to satisfy the request, and recording identifiers of the set of invocations; each invoked component service returning to its requester composite service measured service usage data corresponding to the invocation from the requester composite service, together with the respective invocation identifier; the requester composite service correlating the measured service usage data received from its respective set of component services by reference to the set of invocation identifiers, and outputting the correlated measured usage data.

### SUMMARY OF THE INVENTION

The present invention is directed to a method, a system, and an apparatus for realizing a composite charging service, which are capable of realizing the composite charging service in a simple and convenient manner without modifying each base service.

An embodiment of the invention provides a method for realizing a composite charging service according to claim 1.

An embodiment of the invention provides a charging control apparatus for realizing a composite charging service according to claim 8.

An embodiment of the invention provides a system for realizing a composite charging service according to claim 9.

An embodiment of the invention provides service composition engine for realizing a composite charging service according to claim 10.

It may be known from the technical solutions of the present invention that, according to the present invention, the charging request information from the base service is received, the service coordination process is performed on the received charging request information from the base service according to the charging features of each base service, so as to regenerate the charging request information combining the charging features of each base service, and the regenerated charging request information is sent to the charging engine. This realizes the composite charging service based on various granularities in a simple and convenient manner without modifying each base service.

### BRIEF DESCRIPTION OF THE DRAWINGS

FIG. 1 is a schematic structural view of a system for realizing a composite charging service according to an embodiment of the present invention;
FIG. 2 is a schematic structural view of a service composition engine according to an embodiment of the present invention;
FIG. 3 is a flow chart of a system for realizing a composite charging service according to a first embodiment of the present invention;
FIG. 4 is a flow chart a system for realizing a composite charging service according to a second embodiment of the present invention;
FIG. 5 is a flow chart a system for realizing a composite charging service according to a third embodiment of the present invention;
FIG. 6 is a flow chart of a system for realizing a composite charging service according to a fourth embodiment of the present invention;
FIG. 7 is a flow chart of a system for realizing a composite charging service according to a fifth embodiment of the present invention; and
FIG. 8 is a flow chart of a system for realizing a composite charging service according to a sixth embodiment of the present invention.

### DETAILED DESCRIPTION OF THE EMBODIMENTS

The present invention provides a system for realizing a composite charging service, where charging request information combining charging features of each base service is generated according to charging features of received charging request information of each base service, and the regenerated charging request information is sent to a charging engine 120. The charging engine 120 responses the charging request information, and returns charging response information to each base service, which realizes the composite charging service based on various granularities in a simple and convenient manner without modifying each base service.

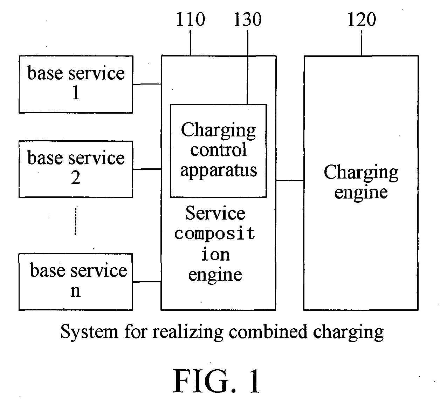

Referring to FIG. 1, a system for realizing a composite charging service according to an embodiment of the present invention includes a service composition engine 110, a charging engine 120, and a plurality of base service.

The service composition engine 110 is configured to perform a service coordination process on received charging request information of the base service, and send the charging request information to the charging engine 120.

The charging engine 120 is configured to return charging response information according to the charging request information sent by the service composition engine 110.

In an embodiment of the present invention, specifically, the charging engine 120 may be an online charging engine.

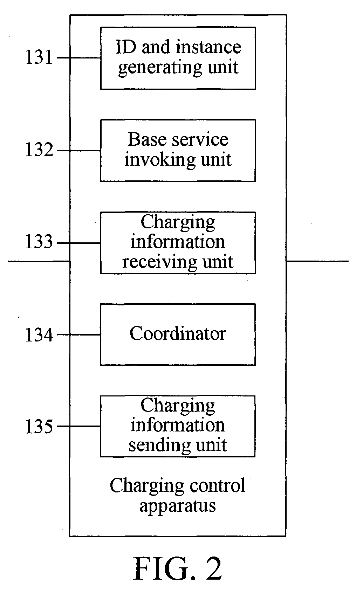

In the service composition engine 110 according to an embodiment of the present invention, a charging control apparatus 130 may be disposed, and referring to FIG. 2, the charging control apparatus 130 may specifically include functional modules, for example, an identifier (ID) and instance generating unit 131, a base service invoking unit 132, a charging information receiving unit 133, a coordinator 134, and a charging information sending unit 135.

The ID and instance generating unit 131 is configured to generate various IDs and instances.

The base service invoking unit 132 is configured to initiate an invoke operation to each base service.

The charging information receiving unit 133 is configured to receive the charging request information of the base service.

The coordinator 134 is configured to perform the service coordination process on the received charging request information of the base service according to charging features of each base service, so as to regenerate charging request information combining the charging features of each base service.

The charging information sending unit 135 is configured to send the regenerated charging request information to the charging engine 120.

In order to enable each base service to sense that the service coordination process needs to be performed on the base service, in the system for realizing the charging service according to an embodiment of the present invention, during the specific implementation, an existing service invoking protocol needs to be extended, where a charging coordination ID, a correlation ID, and a coordination entity ID are added to the service invoking protocol.

The charging coordination ID is configured to represent that the service coordination process needs to be performed on the invoked base service.

The correlation ID is configured to identify a service control point instance and a composite service operation instance having an association relation with the base service.

The coordination entity ID is configured to notify the invoked base service of a coordination entity to which a charging request message of the invoked base service needs to be sent.

It should be noted that in the present invention, a concept of the "service control point instance" is proposed, the service control point instance is configured to uniquely identify a composite service operation instance corresponding to the base service, and uniquely identify a charging session between the base service and the online engine in the service composition engine 110. Further, in an embodiment of the present invention, a correlation ID having an association relation with the service control point instance is generated, and the correlation ID and other information are sent to the invoked base service through the invoking protocol, the invoked base service carries the information in the charging request information subsequently sent to the coordination entity, and the coordination entity, for example, the service composition engine 110, may acquire the composite service operation instance corresponding to the base service in the service composition engine 110 according to the correlation ID and other information.

It is further noted that values of the charging coordination ID are different, which represents that manners for performing the service coordination process on the invoked base service are different. For example, it is assumed that two specific service combinations exist, one is formed by base service A and B and is represented as service Z, and the other is formed by base service A, B, and C and is represented as service Y For the two composite services, when processing the service Z, that is, invoking base service A and B, the service composition engine 110 may assign that the charging coordination ID is '1'; and when processing service Y, that is, invoking base service A, B, and C, the service composition engine 110 may assign that the charging coordination ID is '2'. When sending a charging request to the coordination entity, for example, the service composition engine 110, a base service execution environment may additionally carry the charging coordination ID. After receiving the charging requests, the service composition engine 110 may identify the specific service combination through the charging coordination ID, for example, whether the service combination is service Y or service Z.

The coordination entity may have a configuration as follows, so as to support the features.

| **Charging Coordination ID** | **Name of Composite Service** | **Charging Features** |
|---|---|---|
| 1 | Z | The composite service is formed by services A and B, and has a discount of 20% off. |
| 2 | Y | The composite service is formed by services A, B, and C, services A and B have a discount of 30% off, and the charging of service C remains unchanged. |

After receiving the charging coordination ID, the correlation ID, and the coordination entity ID, the invoked base service may sense that the service coordination process needs to be performed on the charging request information, and may also know the specific coordination entity for performing the service coordination process on the charging request information.

It should be noted that no matter whether the base service is a composite service, it is considered as a base service in an embodiment of the present invention.

In addition, in the system for realizing the composite charging service according to an embodiment of the present invention, during the specific implementation, a Business Process Execution Language (Bpel) needs to be extended, so that functional modules in the system may communicate with one another, so as to acquire correlated information.

In order to make the objectives, technical solutions, and advantages of the present invention more comprehensible, in the following, for example, by adopting a Simple Object Access Protocol (SOAP) as the service invoking protocol, and adopting a Diameter protocol as a charging protocol, the applications of the system for realizing the composite charging service according to the present invention in a typical charging process are further described in detail with reference to the accompanying drawings.

It should be understood that the applicable protocols of the system for realizing the composite charging service according to the present invention are not limited to the above two protocols, and are not limited in the present invention. Further, message formats adopted to transmit the correlated charging information are not limited in the present invention.

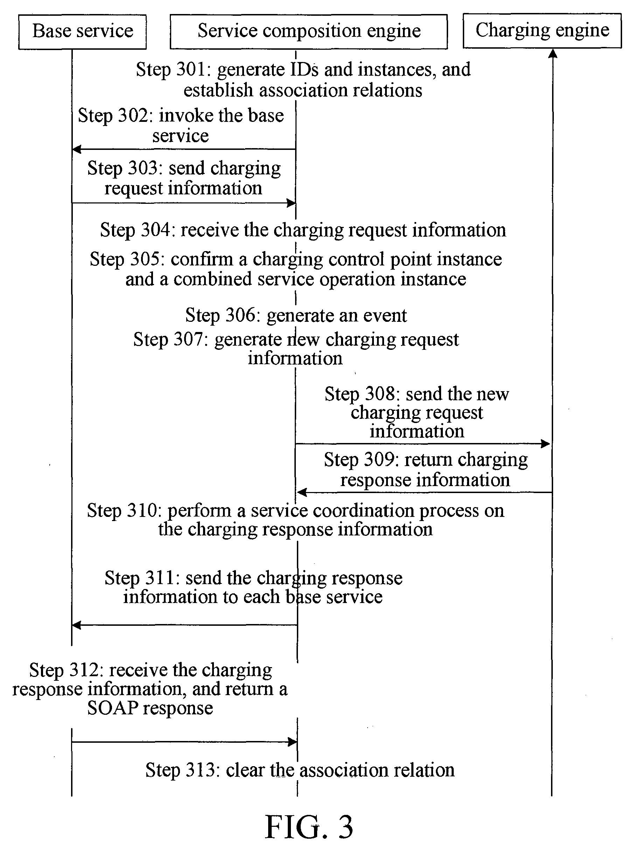

In a first embodiment, the system for realizing the charging service according to the present invention is applied to a charging process based on an event mode, and referring to FIG. 3, the process specifically includes the following steps.

In step 301, the service composition engine 110 generates a charging coordination ID, a correlation ID, a coordination entity ID, and a charging control point instance, and establishes an association relation between the correlation ID and the charging control point instance and an association relation between the correlation ID and a composite service operation instance in the service composition engine 110.

Specifically, the ID and instance generating unit 131 of the charging control apparatus 130 generates the charging coordination ID, the correlation ID, the coordination entity ID, and the charging control point instance.

Further, the coordinator 134 in the charging control apparatus 130 establishes the association relation between the correlation ID and the charging control point instance and the association relation between the correlation ID and the composite service operation instance in the service composition engine 110, and records the association relations.

The association relations recorded by the coordinator 134 may be expressed in the following table.

| **Correlation ID (Correlationid)** | **Charging Control Point Instance (Ctrpoint instance)** | **Composite Service Operation Instance (Service instance)** |
|---|---|---|
| CidA | CtrpinstA | SinstA |

It should be noted that in the system for realizing the composite charging service according to an embodiment of the present invention, in the actual application, attributes of the invoke operation in the existing Bpel need to be extended, where attributes configured to assign the charging control point and configured to indicate the value of the charging coordination ID of the base service are added.

The process of extending the attributes of the invoke operation may specifically be that an attribute "ChgCtrPoint" configured to assign the charging control point instance and an attribute "ChgNegotiation" configured to indicate the value of the charging coordination ID of the base service are added to the original invoke operation. The specific extending process may be described by the Bpel as follows:

```
     <invoke partnerLink="Partnerlinkname"
          portType="PortTypeName"
              operation=" OperationName"
              inputVariable="RequestVar"
           outputVariable="ResponseVar"
          ChgCtrPoint="ChgctrpointName"
     ChgNegotiation="ChgNegotiationName"/>
```

It should be understood that the Bpel for extending the invoke operation and the Bpel involved in the specific implementation of the present invention are not limited to the statements in the specification, may be flexibly edited according to actual situations, and are not limited in the present invention.

In an embodiment, an instance segment of the invoke operation described by the Bpel may be as follows:

```
  <invoke partnerLink="employeeTravelStatus"
            portType="emp:EmployeeTravelStatusPT"
                operation="EmployeeTravelStatus"
         inputVariable="EmployeeTravelStatusRequest"
       outputVariable="EmployeeTravelStatusResponse"
     ChgCtrPoint="Chgctrpointservicel"
    ChgNegotiation="CompositionTypel"/>
```

In step 302, the service composition engine 110 invokes the base service to be combined by adopting the extended SOAP protocol.

After the coordinator 134 successfully establishes the association relations, the base service invoking unit 132 invokes the base service by adopting the extended SOAP protocol.

Invoking information of the SOAP protocol includes the charging coordination ID, the correlation ID, the coordination entity ID, and other information.

It should be noted that under a usual situation, the coordination entity is the service composition engine 110, so that the service composition engine 110 may not carry the coordination entity ID when invoking the base service by adopting the extended invoking protocol.

In step 303, the invoked base service sends charging request information.

After receiving the invoking information sent by the service composition engine 110, the base service sends the charging request information to the service composition engine 110 by sending a charging request message.

The charging request information may specifically include a charging session ID, charging information, type information of the charging request message, and type information of a charging request message sending instance. When the charging request information is initial charging request information, the charging session ID includes the correlation ID received by the base service.

It should be noted that the base service may not carry the correlation ID when sending non-initial charging request information.

In step 304, the service composition engine 110 receives the charging request information.

Specifically, the charging information receiving unit 133 in the charging control apparatus 130 receives the charging request message carrying the charging request information sent by the base service, completes a protocol conversion, and sends the charging request message to the coordinator 134.

In step 305, the coordinator 134 confirms the charging control point instance and the composite service operation instance.

The coordinator 134 confirms the charging control point instance having the association relation with the charging session ID or the correlation ID in step 301 according to the charging session ID or the correlation ID in the charging request information, so as to confirm the associated composite service operation instance.

It should be noted that when the base service sends the initial charging request information, the coordinator 134 confirms the charging control point instance and the composite service operation instance according to the correlation ID in the charging session ID, and further the coordinator 134 establishes the association relation between the charging session ID and the confirmed charging control point instance and the association relation between the charging session ID and the confirmed composite service operation instance, so that the base service may not carry the correlation ID when sending the non-initial charging request information, and the coordinator 134 confirms the charging control point instance and the composite service operation instance having the association relation with the charging session ID according to the charging session ID sent by the base service. Specifically, it may be expressed in the following table.

| **Charging Session ID (SessionID)** | **Charging Control Point Instance (Ctrpoint instance)** | **Composite Service Operation Instance (Service instance)** |
|---|---|---|
| SessionID | CtrpinstA | SinstA |

It should be noted that the charging session ID and the correlation ID are unique in the coordinator 134, and further, the association relation between the charging session ID or the correlation ID and the charging control point instance and the association relation between the charging session ID or the correlation ID and the composite service operation instance are also unique in the coordinator 134.

In step 306, the coordinator 134 converts the charging request message to an event.

The coordinator 134 converts the received charging request information to the event according to the type information of the charging request message, the type information of the charging request message sending entity, and other information in the charging request information, and the event information is unique in the coordinator 134.

The event information may specifically include an event name and information of the charging control point instance of the event. For example, the event name is InitialChargingRequest, and the charging control point instance is CtrpinstA. Here, the information of the charging control point instance is the information of the charging control point instance mentioned in the foregoing step.

The conversion may be expressed as follows.

| **Entity Type** | **Message Type** | **Event Name** |
|---|---|---|
| Base service | InitialCCR | InitialChargingRequest |
| Base service | CCR | ChargingRequest |
| Charging Engine 120 | RAR | ReAuthRequest |

In step 307, the coordinator 134 regenerates charging request information according to the charging features of each base service.

In this step, the coordinator 134 triggers a logic code after matching the event information, for example, an externally input logic code, a logic code stored by the service composition engine 110, or a logic code assigned by the composite service operation instance, and in the platform of the composite service operation instance, the coordinator 134 performs the service coordination process, for example, a modifying operation, an adding operation, or a deleting operation, on the charging request information of the base service according to the charging features of each base service, so as to regenerate the charging request information combining the charging features of each base service.

It should be further noted that in the system for realizing the composite charging service according to an embodiment of the present invention, by adding an activity to the Bpel, the logic code may be triggered after the matching of the event information is passed. Specifically, it may be realized through the Bpel as follows:

```
                    <chgEventHandlers>
      <catch eventName="NCEventname" eventowner = "Ownername">
                                ...
                        </catch>+
                    </chgEventHandlers>
```

Each chgEventHandlers may include a plurality of Catch units, and each Catch unit assigns the event name processed by the catch unit through the eventName, and assigns the specific charging control point to which the event belongs through the eventowner. Only when both the eventName and the eventowner are matched, the Catch unit is entered, so as to enter the externally input logic code, the logic code stored by the service composition engine 110, and/or the logic code assigned by the composite service operation instance, and perform the service coordination process on the charging request information sent by each base service. In this way, the charging request information combining the charging features of each base service is generated.

In an embodiment, the activity instance segment described by the Bpel may be expressed as follows:

```
                      <chgEventHandlers>
              <catch eventName="lns:InitialChargingRequest" eventowner =
                      "Chgctrpointservice1">
                              ...
                          </catch>
              <catch eventName="lns:ChargingRequest" eventowner =
                      "Chgctrpointservice1">
                              ...
                          </catch>
              <catch eventName="lns:ReAuthRequest" eventowner =
                      "Chgctrpointservice1">
                              ...
                          </catch>
              <catch eventName="lns:AbortSessionRequest" eventowner =
                      "Chgctrpointservice1">
                              ...
                          </catch>
                              ...
                      </chgEventHandlers>
```

In step 308, the service composition engine 110 sends the regenerated charging request information to the charging engine 120.

The coordinator 134 instructs the charging information sending unit 135 to send the regenerated charging request information.

The charging information sending unit 135 performs the protocol conversion on the charging request message carrying the new charging request information, and sends the charging request message after the protocol conversion to the charging engine 120.

It should be noted that in the system for realizing the charging service according to an embodiment of the present invention, in the actual application, an activity needs to be added to the Bpel, so that the charging information sending unit 135 is enabled to send the charging request message to the charging engine 120. Specifically, it may be realized through the Bpel as follows:
chgsendtoOCS(ChgCtrPointType chgctrPointname, xsd:string msgtype)

A first parameter of the function is the charging control point instance, and is configured to identify a charging session between a certain base service and the charging engine 120; and a second parameter points out the type of the sent charging request message, for example, Credit control Request, Abort session response, or Re-Auth response.

In this step, further, the coordinator 134 sets a state of the charging session of the composite service operation instance as a waiting state, so as to indicate that the composite service operation instance subsequently needs the charging response information.

In step 309, the charging engine 120 responses the received charging request information, and returns charging response information.

The process performed by the charging engine 120 on the charging request information is the same as that of the conventional technology, so the details are not described herein again, and the charging engine 120 returns the charging response information to the service composition engine 110 by sending a charging response message.

In step 310, the service composition engine 110 receives the charging response information, and performs the service coordination process on the charging response information.

Firstly, the charging information receiving unit 133 receives the charging response message carrying the charging response information returned by the charging engine 120, completes the protocol conversion and the format conversion, and sends the charging response message to the coordinator 134.

It should be noted that in the system for realizing the charging service according to the present invention, in the actual application, an activity needs to be added to the Bpel, so that the charging information receiving unit 133 is enabled to receive the charging response message from the charging engine 120. Specifically, it may be realized through the Bpel as follows:
chgreceiveFromOCS(ChgCtrPointType chgctrPointname, xsd:string msgtype)

A first parameter of the function is the charging control point instance, and is configured to identify a charging session between a certain base service and an online charging system; and a second parameter points out the type of the received charging response message, for example, Credit Control Answer.

The coordinator 134 acquires the charging control point instance having the association relation with the charging session ID according to the charging session ID in the charging response information, and further acquires the corresponding composite service operation instance. The coordinator 134 sets the state of the charging session of the composite service operation instance as a state that the response is received, so as to indicate that the charging session receives the charging response information and waits for subsequent processes.

Here, if the service coordination process needs to be performed on the charging response information, the modifying operation, the deleting operation, or the adding operation is performed on the charging response information by using the externally input logic code, the preset logic code, or the logic code pre-assigned by the user in the composite service.

It should be noted that in step 307, after the initial charging request information is received, a logic code is triggered by matching the event information, and this step is a part of the logic code. That is to say, it is determined whether to modify the received charging information and how to modify the received charging information according to specific service demands.

The coordinator 134 instructs the charging information sending unit 135 to send the charging response information to the base service.

In step 311, the service composition engine 110 sends the charging response information to each base service.

The charging information sending unit 135 in the service composition engine 110 performs the protocol conversion on the charging response message, and sends the charging response message after the protocol conversion to each base service.

In step 312, the base service receives the charging response information.

The base service receives the charging response message carrying the charging response information, completes the processing of the charging response message, and returns a SOAP response to the service composition engine 110.

In step 313, the composite service operation instance clears the association relation with the corresponding charging control point instance in the coordinator 134 through an internal invoke message.

Till now, in the first embodiment of the present invention, the composite charging process based on the event mode is completed. It may be known from the above description that in the system for realizing the composite charging service according to the present invention, the service coordination process is performed on the charging request information of each base service according to the charging features of each base service, so as to generate the charging request information combining the charging features of each base service, and an interaction with the charging engine 120 is performed according to the charging request information, so as to complete the composite charging service. This realizes the composite charging service based on the event mode in a simple and convenient manner without modifying each base service. Further, in the system for realizing the composite service according to the present invention, during the specific implementation, the composite charging process of the base service based on any granularities may be realized without requiring the granularity of each base service.

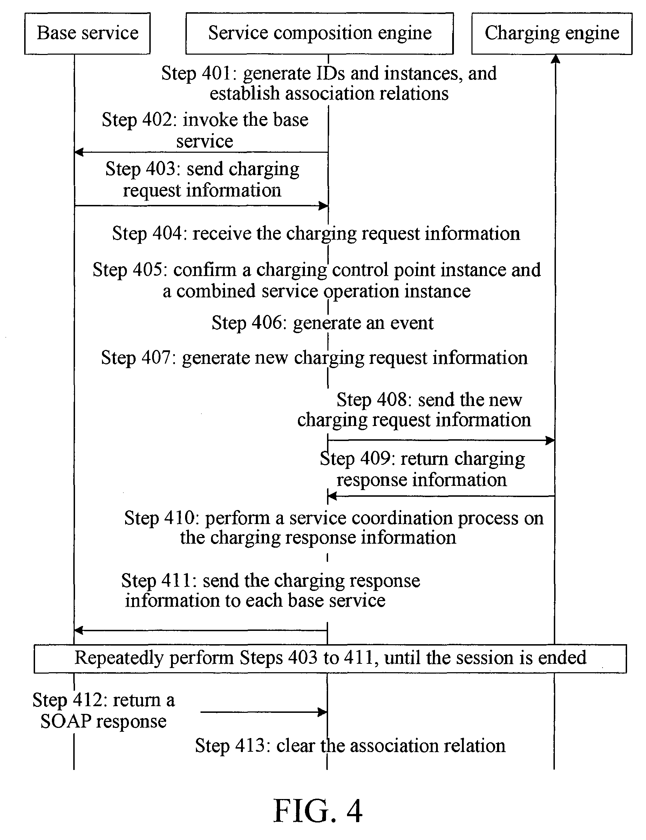

In a second embodiment, the system for realizing the charging service according to the present invention is applied to a charging process based on a session mode, and the specific process is as shown in FIG. 4.

The charging process based on the session mode is basically similar to the charging process based on the event mode, except that the base service in the charging process based on the session mode may report the charging request information for many times. It is further described that the process similar to steps 303 to 311 in the first embodiment, that is, steps 403 to 411 in FIG. 4, is executed for many times in the charging process based on the session mode, and steps 412 and 413 are executed after the session is ended. Therefore, the specific implementation of the second embodiment is not described herein again.

It may be known from FIG. 4 and the above description that, in the system for realizing the composite charging service according to an embodiment of the present invention, the service coordination process is performed on the charging request information of each base service according to the charging features of each base service, so as to generate the charging request information combining the charging features of each base service, and an interaction with the charging engine 120 is performed according to the charging request information, so as to complete the composite charging service. This realizes the composite charging service based on the event mode and various granularities in a simple and convenient manner without modifying each base service.

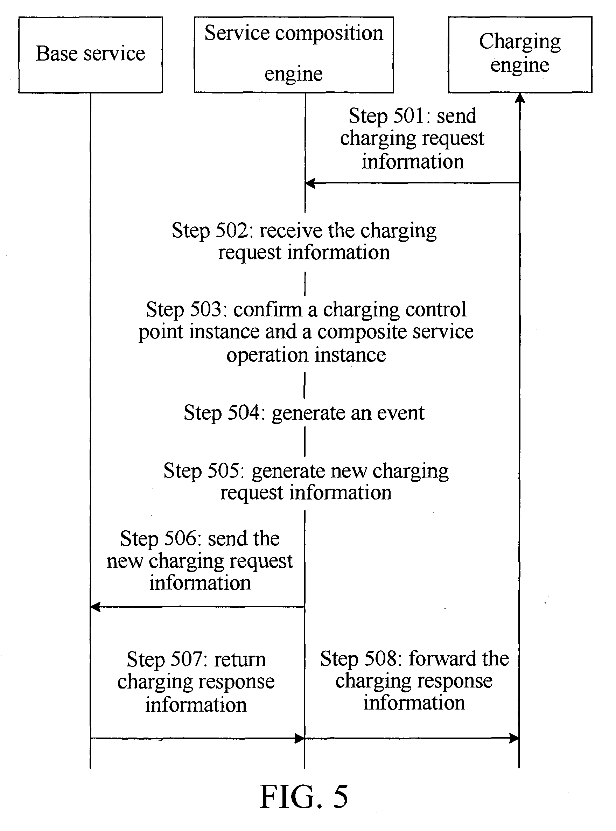

In a third embodiment, the system for realizing the charging service according to the present invention is applied to a charging process initiated by the charging engine 120, and the specific implementation of the process is as shown in FIG. 5.

It should be noted that the charging engine 120 can initiate a non-initial charging request according to the received correlated charging request information only. Further, the steps of generating the correlation ID and the instance, and establishing the association relation in the third embodiment are the same as that of the first and the second embodiments, so that the procedure is not shown in FIG. 5.

The specific implementation of the third embodiment of the present invention includes the following steps.

In step 501, the charging engine 120 sends charging request information to the service composition engine 110.

The charging request information includes a charging session ID and other information. The online engine sends the charging request information to the service composition engine 110 by sending a charging request message.

It should be noted that the charging session ID of one charging engine 120 is unique, but the service composition engine 110 may interact with a plurality of charging engines 120 at the same time, so that the charging session ID received by the service composition engine 110 may not be unique, and thus when the service composition engine 110 interacts with the plurality of charging engines 120, the charging session ID is required to be unique in the plurality of charging engines 120, which can be ensured by the plurality of charging engines 120. Alternatively, the service composition engine 110 performs a certain process on the received charging session ID, so as to make the charging session ID unique, which is, for example, realized through an algorithm as follows: new charging session ID = entity ID of the charging engine 120 + original charging session ID.

In the first and the second embodiments, the problem of the uniqueness of the charging session ID may be solved by adopting the same method.

In step 502, the charging information receiving unit 133 receives the charging request message.

The charging information receiving unit 133 performs a protocol conversion on the received charging request message, and sends the charging request message completing the conversion to the coordinator 134.

In step 503, the coordinator 134 confirms a charging control point instance and a composite service operation instance.

The coordinator 134 confirms the charging control point instance and the composite service operation instance having an association relation with the charging session ID according to the charging session ID carried in the charging request message.

In step 504, the coordinator 134 converts the charging request message to an event.

The coordinator 134 converts the charging request message to the event according to type information of the charging request message, type information of a charging request message sending entity, and other information in the charging request information, where the event information is unique in the coordinator 134.

In step 505, the coordinator 134 regenerates charging request information.

If the service coordination process needs to be performed on the charging information sent by the charging engine 120, a service coordination process similar to step 307 is executed, the charging request message is converted to the event, and a specific logic code is entered, so as to generate new charging request information.

In step 506, the coordinator 134 sends the charging request information to the base service through the charging information sending unit 135.

It should be noted that, in the system for realizing the charging service according to an embodiment of the present invention, in the actual application, an activity needs to be added to a Bpel, so that the service composition engine 110 may send the charging request information to the base service. Specifically, it may be realized through the Bpel as follows:
chgSendtoService(ChgCtrPointType chgctrPointname, xsd:string msgtype)

A first parameter ChgCtrPointType chgctrPointname in the function is the charging control point instance, and is configured to identify a charging session between a certain base service and the charging engine 120, where ChgCtrPointType is a charging type; and a second parameter points out a type of the message bearing the charging request information, for example, Credit Control Answer, Abort session Request, or Re-Auth Request.

In step 507, the base service returns charging response information.

In step 508, the service composition engine 110 forwards the charging response information to the charging engine 120.

It should be noted that in the system for realizing the charging service according to the present invention, in the actual application, an activity needs to be added to the Bpel, so that the service composition engine 110 is enabled to acquire the charging response information returned by the base service. Specifically, it may be realized through the Bpel as follows:
chgreceivefromService(ChgCtrPointType chgctrPointname, xsd:string msgtype)

A first parameter in the function is the charging control point instance, and is configured to identify a charging session between a certain base service and the charging engine 120; and a second parameter points out a type of the charging request message carrying the regenerated charging request information, for example, Abort session response or Re-Auth response.

If necessary, in this step, the service coordination process may be performed on the received charging response information.

In addition, the Bpel realizing the charging response information sent by the charging information sending unit 135 to the charging engine 120 may adopt the Bpel described in step 308 of the first embodiment.
chgsendtoOCS(ChgCtrPointType chgctrPointname, xsd:string msgtype)

It may be known from FIG. 5 and the above description that, in the system for realizing the composite charging service according to an embodiment of the present invention, the composite charging service based on various granularities and initiated by the charging engine 120 is realized in a simple and convenient manner without modifying each base service.

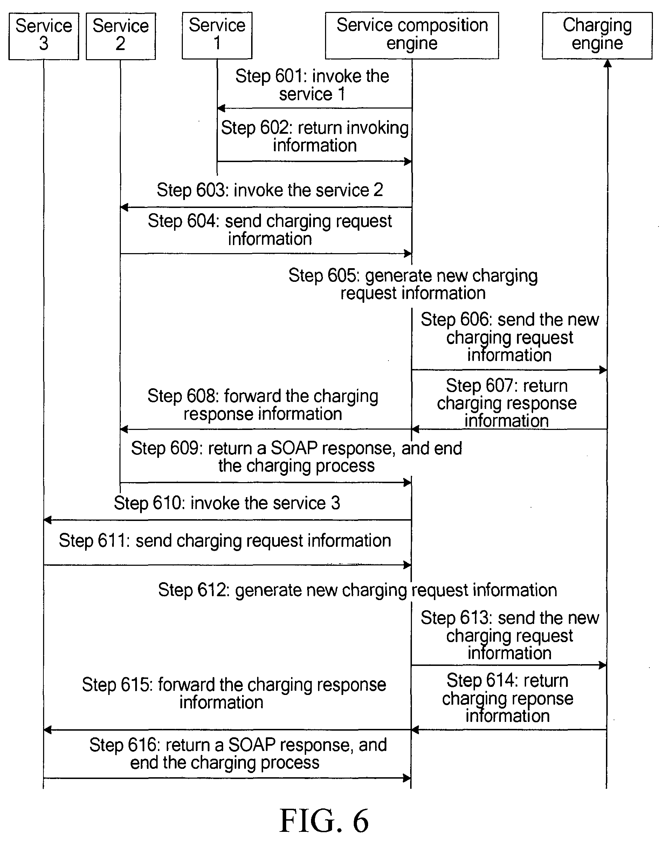

In a fourth embodiment, the system for realizing the charging service according to the present invention is applied to a charging process in which a series of services used by a user affect one another, and charging features need to be coupled, for example, the user uses a service 1, and when using a service 2 and a service 3, the user may enjoy a discount in a certain degree. Referring to FIG. 6, the procedure specifically includes the following steps.

In step 601, the service composition engine 110 invokes the service 1.

In step 602, the service 1 returns invoking information.

In step 603, the service composition engine 110 invokes the service 2.

The user already uses the service 1, so that when using the service 2, the user may enjoy the discount policy. Here, the service composition engine 110 needs to notify the service 2 that a service coordination process needs to be performed on charging request information, and the service composition engine 110 invokes the service 2 by adopting an extended SOAP protocol.

In this step, further, the service composition engine 110 generates a charging coordination ID, a correlation ID, a coordination entity ID, and a charging control point instance, and establishes an association relation between the correlation ID and the charging control point instance and an association relation between the correlation ID and a composite service operation instance.

In step 604, the service 2 sends the charging request information.

In step 605, the service composition engine 110 performs the service coordination process on the charging request information sent by the service 2, so as to generate new charging request information.

The operation procedure in this step is the same as the operation procedure in steps 304 to 307 of the first embodiment, where a logic code is triggered after matching the event information, and the service coordination process is performed on the charging request information of the service 2, so as to regenerate the new charging request information. For example, discount information is directly added to the charging information of the service 2, or the charging information of the service 2 is modified.

In step 606, the service composition engine 110 sends the charging request information regenerated for the service 2 to the charging engine 120.

In step 607, the charging engine 120 returns online charging response information.

In step 608, the service composition engine 110 forwards the charging response information to the service 2.

In step 609, the service 2 returns a SOAP response, and the charging process ends.

In step 610, the service composition engine 110 invokes the service 3.

In step 611, the service 3 sends charging request information.

In step 612, the service composition engine 110 performs the service coordination process on the charging request information sent by the service 3, so as to generate the new charging request information.

In step 613, the service composition engine 110 sends the charging request information regenerated for the service 3 to the charging engine 120.

In step 614, the charging engine 120 returns charging response information.

In step 615, the service composition engine 110 forwards the charging response information to the service 3.

In step 616, the service 3 returns a SOAP response, and the charging process ends.

It may be known from the above description that in the system for realizing the composite charging service according to the present invention, necessary modifications are made to the received charging request information according to the charging features of services 1, 2, and 3, and the regenerated charging request information is sent to the charging engine 120. This realizes the composite charging service in a simple and convenient manner without modifying each base service having the coupled relation of the charging features and without requiring the granularity of each base service.

When the system for realizing the composite charging service according to the present invention is applied to the scenario in the fourth embodiment, the adopted Bpel instance is as follows:

```
                              ...
                <invoke partnerLink="BuyAdGoods"
                   portType="ad: BuyAdGoods PT"
                     operation=" BuyAdGoods"
             inputVariable=" BuyAdGoods Request"
          outputVariable=" BuyAdGoods Response"
                 ChgCtrPoint="Chgctrpointservice1"/>
              <invoke partnerLink="buyTicket"
               portType="bus: buyTicket PT"
                    operation="buyTicket "
              inputVariable=" buyTicketDetails"
             outputVariable=" buyTicketResponse"
                 ChgCtrPoint="Chgctrpointservice2"/>
                              ...
                     <chgEventHandlers>
      <catch eventName="lns: InitialChargingRequest" eventowner =
                 "Chgctrpointservice1">
      <chgputvalue("Discount-servicead", Chgctrpointservice1, "CCR",
                 "Service-Context-Id")/>
          <chgsendtoOCS(Chgctrpointservice1, "CCR")/>
        <chgreceiveFromOCS(Chgctrpointservice1, "CCA")/>
          <chgsendtoservice(Chgctrpointservice1, "CCA")/>
                        </catch>
      <catch eventName="lns: InitialChargingRequest" eventowner =
                        "Chgctrpointservice2">
      <chgputvalue(Discount-servicetic, Chgctrpointservice2, "CCR",
                    "Service-Context-Id")/>
           <chgsendtoOCS(Chgctrpointservice2, "CCR")/>
        <chgreceiveFromOCS(Chgctrpointservice2, "CCA")/>
          <chgsendtoservice(Chgctrpointservice2, "CCA")/>
                        </catch>
                   </chgEventHandlers>
                                                      ...
```

"chgputvalue()" is an extension function, configured to add or modify a data unit in the charging information.

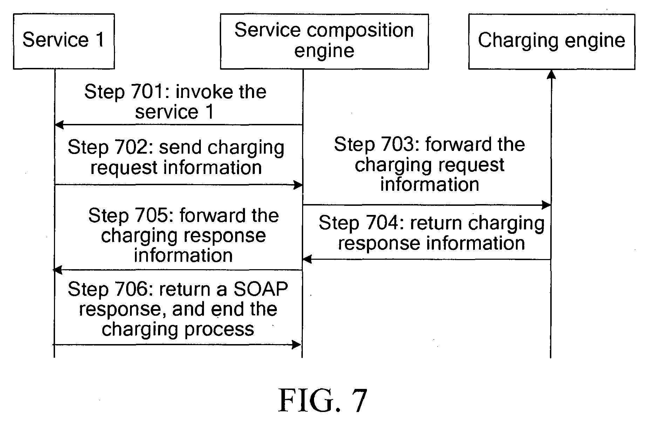

In a fifth embodiment, the system for realizing the composite charging service according to the present invention may also be applied to a scenario in which the charging features of each base service do not need to be coupled, and referring to FIG. 7, the specific process includes the following steps.

In step 701, the service composition engine 110 invokes a service 1.

In step 702, the service 1 sends charging request information to the service composition engine 110.

In step 703, the service composition engine 110 forwards the charging request information sent by the service 1 to the charging engine 120.

Service 1 does not need to perform charging feature coupling with other services, so that the service composition engine 110 may directly forward the charging request information sent by the service 1 to the charging engine 120 without performing any modification.

In step 704, the charging engine 120 receives the charging request information sent by the service 1, and returns charging response information.

In step 705, the service composition engine 110 forwards the charging response information returned by the charging engine 120 to service 1.

In step 706, the service 1 returns a SOAP response, and the charging process ends.

Till now, in the system for realizing the composite charging service according to an embodiment of the present invention, the charging process of the service that does not have the charging feature coupling with other services is completed. If other similar services need to be processed subsequently, steps 701 to 706 are repeatedly performed.

It may be known from the above description that in the system for realizing the composite service according to the present invention, the composite service charging process without the charging feature coupling is realized in a simple and convenient manner without modifying each base service.

When the system for realizing the composite charging service according to the present invention is applied to the scenario in the fifth embodiment, the adopted Bpel instance is as follows:

```
                          ...
             <invoke partnerLink="employeeTravelStatus"
              portType="emp:EmployeeTravelStatusPT"
                  operation="EmployeeTravelStatus"
           inputVariable="EmployeeTravelStatusRequest"
          outputVariable="EmployeeTravelStatusResponse"
              ChgCtrPoint="Chgctrpointservice1"/>
           <invoke partnerLink="AmericanAirlines"
              portType="aln:FlightAvailabilityPT"
                operation="FlightAvailability"
                inputVariable="FlightDetails"
              outputVariable="FlightResponseAA"
            ChgCtrPoint="Chgctrpointservice2"/>
                          ...
<                       chgEventHandlers>
       <catch eventName="lns: InitialChargingRequest" eventowner =
                    "Chgctrpointservice1">
            <chgsendtoOCS(Chgctrpointservice1, "CCR")/>
          <chgreceiveFromOCS(Chgctrpointservice1, "CCA")/>
             <chgsendtoservice(Chgctrpointservice1, "CCA")/>
                         </catch>
         <catch eventName="lns: InitialChargingRequest" eventowner =
                     "Chgctrpointservice2">
             <chgsendtoOCS(Chgctrpointservice2, "CCR") />
            <chgreceiveFromOCS(Chgctrpointservice2, "CCA")/>
               <chgsendtoservice(Chgctrpointservice2, "CCA")/>
                         </catch>
                   </chgEventHandlers>
                                                                  ...
```

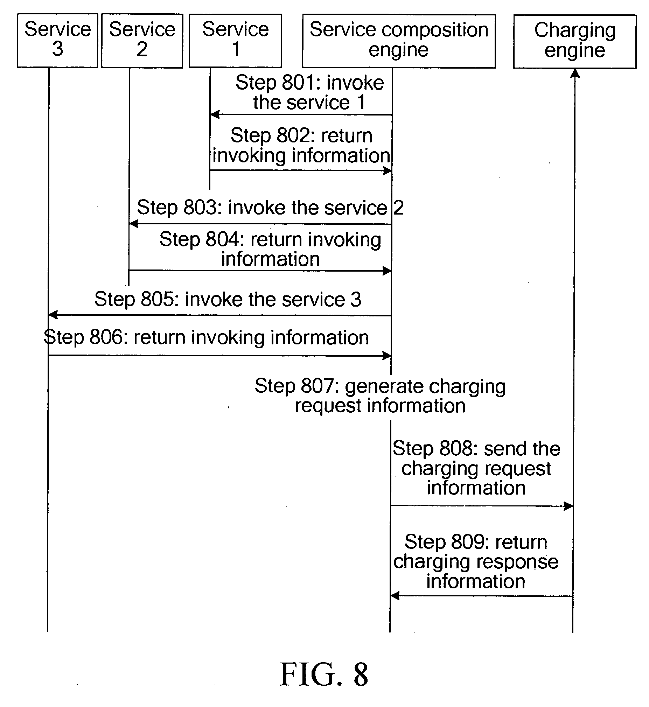

In a sixth embodiment, the system for realizing the composite charging service according to the present invention may also be applied to a charging process initiated by the service composition engine 110 according to the using situation of each base service, and referring to FIG. 8, the specific process includes the following steps.

In steps 801 to 806, the service composition engine 110 acquires the using situations of services 1, 2, and 3.

In step 807, the service composition engine 110 generates charging request information according to the using situation of each base service.

In step 808, the service composition engine 110 sends the charging request information to the charging engine 120.

In step 809, the charging engine 120 returns charging response information.

It may be known from the above description that in the system for realizing the composite service according to the present invention, the charging process initiated by the service composition engine 110 is realized in a simple and convenient manner without modifying each base service.

When the system for realizing the composite charging service according to the present invention is applied to the scenario in the sixth embodiment, the adopted Bpel instance is as follows:

```
                                   ...
                       <invoke partnerLink="Service1"
                          portType="ad: ServicelPT"
                         operati on=" Service1operation"
                       inputVariable="Service1Request"
                    outputVariable="ServicelResponse" />
                    <invoke partnerLink="BuyAdGoods"
                       portType="ad: BuyAdGoods PT"
                          operation="BuyAdGoods"
                    inputVariable="BuyAdGoods Request"
                  outputVariable="BuyAdGoods Response"/>
                    <invoke partnerLink="buyTicket"
                      portType="bus: buyTicket PT"
                           operation="buyTicket"
                    inputVariable="buyTicketDetails"
                       outputVariable="buyTicketResponse"/>
                                   ...
        ...//here the process of adding the charging information is omitted;
                 <chgsendtoOCS(Chgctrpointservice1, "CCR")/>
                                   <chgreceiveFromOCS(Chgctrpointservice1,
  "CCA")/>
```

It should be noted that, in the system for realizing the composite charging service according to an embodiment of the present invention, in the actual application, the charging request information regenerated according to the charging features of each base service is returned to each base service, and each base service interacts with the charging engine 120 according to the charging request information after the service coordination process, so as to complete the charging process.

Moreover, in addition to being disposed in the service composition engine 110, the charging control apparatus 130 according to the present invention may also be disposed in the charging engine 120, or is independently disposed in the system for realizing the composite charging service according to the present invention, and interacts with the base service, the service composition engine 110, and the charging engine 120, so as to complete the charging process of the composite service.

To sum up, the present invention provides the system for realizing the composite charging service. The system may be applied to various modes and various scenarios, for example, may be applied to the charging process based on the event mode or the session mode, or may be applied to the scenario in which the composite services have or do not have the charging feature coupling, the service coordination process is performed on the received charging request information of the base service, the charging request information combining the charging features of each base service is regenerated, and the interaction with the charging engine 120 is performed, so as to complete the charging process of the composite service. Further, in the system for realizing the composite charging service according to the present invention, in the actual application, the charging process of the composite service based on any granularity may be realized without modifying each base service and without requiring the granularity of each base service.

The above descriptions are merely some exemplary embodiments of the present invention, but not intended to limit the present invention.

## Claims

1. A method for realizing a composite charging service for a composite service, wherein the composite service is a service combination formed by a plurality of base services, the method comprising:
receiving (304) a charging request information from a base service;
performing (307) a service coordination process on the received charging request information from the base service according to charging features of each base service;
regenerating a charging request information combining the charging features of each base service; and
sending (308) the regenerated charging request information to a charging engine;
the method **characterized in that** before the receiving the charging request information from the base service, the method further comprises:
generating (301) a charging coordination identifier, ID, a correlation ID, a coordination entity ID, and a charging control point instance;
establishing an association relation between the correlation ID and the charging control point instance and an association relation between the correlation ID and a composite service operation instance; and
initiating (302) an invoke operation to each base service, wherein information of the invoke operation comprises the charging coordination ID, the correlation ID, and the coordination entity ID,
the charging coordination ID is configured to represent that the service coordination process needs to be performed on the invoked base service and how to perform the coordination process;
the correlation ID is configured to identify the service control point instance and the composite service operation instance having the association relation with the base service;
the coordination entity ID is configured to notify the base service of the coordination entity to which the charging request information is required to be sent; and
the service control point instance is configured to identify the composite service operation instance corresponding to the base service, and identify a charging session between the base service and an online engine.

2. The method according to claim 1, wherein the charging request information comprises a charging session ID, charging information of the base service, type information of a charging request message, and type information of a charging request message sending entity; and
when the charging request message is an initial charging request message, the charging session ID comprises the correlation ID.

3. The method according to claim 2, wherein the performing the service coordination process on the received charging request information from the base service according to the charging features of each base service, and regenerating the charging request information combining the charging features of each base service comprises:
acquiring (305) the charging control point instance and the composite service operation instance having the association relation with the correlation ID or the charging session ID according to the correlation ID or the charging session ID;
converting (306) the charging request message into event information according to the type information of the charging request message and the type information of the charging request message sending entity; and
matching (307) the event information, and after passing the matching operation, performing the service coordination process on the charging request information through at least one of an externally input logic code, a stored logic code, and a logic code assigned by the composite service operation instance, and regenerating the charging request information combining the charging features of each base service.

4. The method according to claim 3, wherein the acquiring the charging control point instance and the composite service operation instance having the association relation with the correlation ID or the charging session ID according to the correlation ID or the charging session ID comprises:
acquiring the charging control point instance and the composite service operation instance having the association relation with the correlation ID according to the correlation ID in the charging session ID, if the charging request message is the initial charging request message, and establishing the association relation between the charging session ID and the charging control point instance and the association relation between the charging session ID and the composite service operation instance; and
acquiring the charging control point instance and the composite service operation instance having the association relation with the charging session ID according to the charging session IDif the charging request message is a non-initial charging request message.

5. The method according to claim 3, wherein the event information comprises event name information and a service control point instance of the event.

6. The method according to claim 1, wherein the performing the service coordination process comprises:
performing at least one of a modifying operation, a deleting operation, and an adding operation on the charging request information.

7. The method according to claim 2, wherein after the sending the regenerated charging request information to the charging engine, the method further comprises:
receiving (309), by the charging engine, the charging request information, recording the charging session ID in the charging request information, and returning charging response information;
receiving (310) the charging response information returned by the charging engine; and
sending (311) the charging response information to the base service.

8. A charging control apparatus for realizing a composite charging service for a composite service, wherein the composite service is a service combination formed by a plurality of base services, the apparatus comprising:
a charging information receiving unit (133), configured to receive a charging request information from a base service;
a coordinator (134), configured to perform a service coordination process on the received charging request information from the base service according to charging features of each base service, and regenerate a charging request information combining the charging features of each base service; and
a charging information sending unit (135), configured to send the regenerated charging request information to a charging engine; and
the apparatus **characterized in that** it further comprises:
an identifier (ID) and instance generating unit (131), configured to generate a charging coordination ID, a correlation ID, a coordination entity ID, and a charging control point instance; and
the coordinator (134) is further configured to establish an association relation between the correlation ID and the charging control point instance and an association relation between the correlation ID and a composite service operation instance in a service composition engine;
a base service invoking unit (132), configured to initiate an invoke operation to each base service, wherein information of the invoke operation comprises the charging coordination ID, the correlation ID, and the coordination entity ID;
the charging coordination ID is configured to represent that the service coordination process needs to be performed on the invoked base service and how to perform the coordination process;
the correlation ID is configured to identify the service control point instance and the composite service operation instance having the association relation with the base service;
the coordination entity ID is configured to notify the base service of the coordination entity to which the charging request information is required to be sent; and
the service control point instance is configured to identify the composite service operation instance corresponding to the base service, and identify a charging session between the base service and an online engine.

9. A system for realizing a composite charging service, formed by a service composition engine (110) and a charging engine (120), wherein a charging control apparatus (130) according to claim 8 is disposed in the system.

10. A service composition engine, wherein a charging control apparatus according to claim 8 is disposed in the composition engine.

## Patentansprüche

1. Verfahren zum Ausführen eines zusammengesetzten Gebührenerfassungsdienstes für einen zusammengesetzten Dienst, wobei der zusammengesetzte Dienst eine Dienstkombination ist, die durch mehrere Basisdienste gebildet wird, wobei das Verfahren Folgendes umfasst:
Empfangen (304) von Gebührenerfassungsanforderungsinformationen von einem Basisdienst;
Durchführen (307) eines Dienstkoordinationsprozesses an den vom Basisdienst empfangenen Gebührenerfassungsanforderungsinformationen gemäß Gebührenerfassungsmerkmalen jedes Basisdienstes;
Regenerieren von Gebührenerfassungsanforderungsinformationen, die die Gebührenerfassungsmerkmale jedes Basisdienstes kombinieren; und
Senden (308) der regenerierten Gebührenerfassungsanforderungsinformationen an eine Gebührenerfassungsmaschine;
wobei das Verfahren **dadurch gekennzeichnet ist, dass** vor dem Empfangen der Gebührenerfassungsanforderungsinformationen vom Basisdienst, das Verfahren ferner Folgendes umfasst:
Erzeugen (301) einer Gebührenerfassungskoordinationskennung, ID, einer Korrelations-ID, einer Koordinationsdateneinheits-ID und einer Gebührenerfassungskontrollpunktinstanz;
Herstellen einer Verbindungsbeziehung zwischen der Korrelations-ID und der Gebührenerfassungskontrollpunktinstanz und einer Verbindungsbeziehung zwischen der Korrelations-ID und einer zusammengesetzten Dienstoperationsinstanz; und
Einleiten (302) einer Aufrufoperation an jedem Basisdienst, wobei Informationen der Aufrufoperation die Gebührenerfassungskoordinations-ID, die Korrelations-ID und die Koordinationsdateneinheits-ID umfassen,
wobei die Gebührenerfassungskoordinations-ID konfiguriert ist, zu repräsentieren, dass der Dienstkoordinationsprozess am aufgerufenen Basisdienst ausgeführt werden muss und wie der Koordinationsprozess auszuführen ist;
die Korrelations-ID konfiguriert ist, die Dienstkontrollpunktinstanz und die zusammengesetzte Dienstoperationsinstanz zu kennzeichnen, die die Verbindungsbeziehung mit dem Basisdienst aufweist;
die Koordinationsdateneinheits-ID konfiguriert ist, dem Basisdienst die Koordinationsdateneinheit zu melden, an die die Gebührenerfassungsanforderungsinformationen gesendet werden sollen; und
die Dienstkontrollpunktinstanz konfiguriert ist, die zusammengesetzte Dienstoperationsinstanz zu kennzeichnen, die dem Basisdienst entspricht, und eine Gebührenerfassungssitzung zwischen dem Basisdienst und einer Onlinemaschine zu kennzeichnen.

2. Verfahren nach Anspruch 1, wobei die Gebührenerfassungsanforderungsinformationen eine Gebührenerfassungssitzungs-ID, Gebührenerfassungsinformationen des Basisdienstes, Typinformationen einer Gebührenerfassungsanforderungsnachricht und Typinformationen einer Gebührenerfassungsanforderungsnachricht-Sendedateneinheit umfassen; und
wenn die Gebührenerfassungsanforderungsnachricht eine anfängliche Gebührenerfassungsanforderungsnachricht ist, die Gebührenerfassungssitzungs-ID die Korrelations-ID aufweist.

3. Verfahren nach Anspruch 2, wobei das Durchführen des Dienstkoordinationsprozesses an den vom Basisdienst empfangenen Gebührenerfassungsanforderungsinformationen gemäß der Gebührenerfassungsmerkmale jedes Basisdienstes und das Regenerieren der Gebührenerfassungsanforderungsinformationen, die die Gebührenerfassungsmerkmale jedes Basisdienstes kombinieren, Folgendes umfasst:
Erfassen (305) der Gebührenerfassungskontrollpunktinstanz und der zusammengesetzten Dienstoperationsinstanz, die die Verbindungsbeziehung mit der Korrelations-ID oder der Gebührenerfassungssitzungs-ID aufweisen, gemäß der Korrelations-ID oder der Gebührenerfassungssitzungs-ID;
Umwandeln (306) der Gebührenerfassungsanforderungsnachricht in Ereignisinformationen gemäß der Typinformationen der Gebührenerfassungsanforderungsnachricht und der Typinformationen der Gebührenerfassungsanforderungsnachricht-Sendedateneinheit; und
Vergleichen (307) der Ereignisinformationen, und nach dem Bestehen der Vergleichsoperation, Durchführen des Dienstkoordinationsprozesses an den Gebührenerfassungsanforderungsinformationen durch einen extern eingegebenen Logikcode und/oder einen gespeicherten Logikcode und/oder einen Logikcode, der durch die zusammengesetzte Dienstoperationsinstanz zugewiesen wird, und Regenerieren der Gebührenerfassungsanforderungsinformationen, die die Gebührenerfassungsmerkmale jedes Basisdienstes kombinieren.

4. Verfahren nach Anspruch 3, wobei das Erfassen der Gebührenerfassungskontrollpunktinstanz und der zusammengesetzten Dienstoperationsinstanz, die die Verbindungsbeziehung mit der Korrelations-ID oder der Gebührenerfassungssitzungs-ID aufweisen, gemäß der Korrelations-ID oder der Gebührenerfassungssitzungs-ID, Folgendes umfasst:
Erfassen der Gebührenerfassungskontrollpunktinstanz und der zusammengesetzten Dienstoperationsinstanz, die die Verbindungsbeziehung mit der Korrelations-ID aufweisen, gemäß der Korrelations-ID in der Gebührenerfassungssitzungs-ID, wenn die Gebührenerfassungsanforderungsnachricht die anfängliche Gebührenerfassungsanforderungsnachricht ist, und Herstellen der Verbindungsbeziehung zwischen der Gebührenerfassungssitzungs-ID und der Gebührenerfassungskontrollpunktinstanz und der Verbindungsbeziehung zwischen der Gebührenerfassungssitzungs-ID und der zusammengesetzten Dienstoperationsinstanz; und
Erfassen der Gebührenerfassungskontrollpunktinstanz und der zusammengesetzten Dienstoperationsinstanz, die die Verbindungsbeziehung mit der Gebührenerfassungssitzungs-ID aufweisen, gemäß der Gebührenerfassungssitzungs-ID, wenn die Gebührenerfassungsanforderungsnachricht eine nicht anfängliche Gebührenerfassungsanforderungsnachricht ist.

5. Verfahren nach Anspruch 3, wobei die Ereignisinformationen Ereignisnameninformationen und eine Dienstkontrollpunktinstanz des Ereignisses umfassen.

6. Verfahren nach Anspruch 1, wobei das Durchführen des Dienstkoordinationsprozesses Folgendes umfasst:
Durchführen einer Modifizierungsoperation und/oder einer Löschoperation und/oder einer Additionsoperation an den Gebührenerfassungsanforderungsinformationen.

7. Verfahren nach Anspruch 2, wobei nach dem Senden der regenerierten Gebührenerfassungsanforderungsinformationen an die Gebührenerfassungsmaschine, das Verfahren ferner Folgendes umfasst:
Empfangen (309) durch die Gebührenerfassungsmaschine der Gebührenerfassungsanforderungsinformationen, Aufzeichnen der Gebührenerfassungssitzungs-ID in den Gebührenerfassungsanforderungsinformationen und Zurückschicken von Gebührenerfassungsantwortinformationen;
Empfangen (310) der durch die Gebührenerfassungsmaschine zurückgeschickten Gebührenerfassungsantwortinformationen; und
Senden (311) der Gebührenerfassungsantwortinformationen an den Basisdienst.

8. Gebührenerfassungssteuervorrichtung zur Ausführung eines zusammengesetzten Gebührenerfassungsdienstes für einen zusammengesetzten Dienst, wobei der zusammengesetzte Dienst eine Dienstkombination ist, die durch mehrere Basisdienste gebildet wird, wobei die Vorrichtung Folgendes umfasst:
eine Gebührenerfassungsinformationsempfangseinheit (133), die konfiguriert ist, Gebührenerfassungsanforderungsinformationen von einem Basisdienst zu empfangen;
einen Koordinator (134), der konfiguriert ist, einen Dienstkoordinationsprozess an den vom Basisdienst empfangenen Gebührenerfassungsanforderungsinformationen gemäß Gebührenerfassungsmerkmalen jedes Basisdienstes durchzuführen und Gebührenerfassungsanforderungsinformationen zu regenerieren, die die Gebührenerfassungsmerkmale jedes Basisdienstes kombinieren; und
eine Gebührenerfassungsinformationssendeeinheit (135), die konfiguriert ist, die regenerierten Gebührenerfassungsanforderungsinformationen an eine Gebührenerfassungsmaschine zu senden; und
wobei die Vorrichtung **dadurch gekennzeichnet ist, dass** sie ferner Folgendes aufweist:
eine Kennungs- (ID) und Instanzerzeugungseinheit (131), die konfiguriert ist, eine Gebührenerfassungskoordinations-ID, eine Korrelations-ID, eine Koordinationsdateneinheits-ID und eine Gebührenerfassungskontrollpunktinstanz zu erzeugen; und
wobei der Koordinator (134) ferner konfiguriert ist, eine Verbindungsbeziehung zwischen der Korrelations-ID und der Gebührenerfassungskontrollpunktinstanz und eine Verbindungsbeziehung zwischen der Korrelations-ID und einer zusammengesetzten Dienstoperationsinstanz in einer Dienstzusammensetzungsmaschine herzustellen;
eine Basisdienstaufrufeinheit (132), die konfiguriert ist, eine Aufrufoperation an jedem Basisdienst einzuleiten, wobei Informationen der Aufrufoperation die Gebührenerfassungskoordinations-ID, die Korrelations-ID und die Koordinationsdateneinheits-ID umfassen;
wobei die Gebührenerfassungskoordinations-ID konfiguriert ist, zu repräsentieren, dass der Dienstkoordinationsprozess am aufgerufenen Basisdienst ausgeführt werden muss und wie der Koordinationsprozess auszuführen ist;
die Korrelations-ID konfiguriert ist, die Dienstkontrollpunktinstanz und die zusammengesetzte Dienstoperationsinstanz zu kennzeichnen, die die Verbindungsbeziehung mit dem Basisdienst aufweisen;
die Koordinationsdateneinheits-ID konfiguriert ist, dem Basisdienst die Koordinationsdateneinheit zu melden, an die die Gebührenerfassungsanforderungsinformationen gesendet werden sollen; und
die Dienstkontrollpunktinstanz konfiguriert ist, die zusammengesetzte Dienstoperationsinstanz zu kennzeichnen, die dem Basisdienst entspricht, und eine Gebührenerfassungssitzung zwischen dem Basisdienst und einer Onlinemaschine zu kennzeichnen.

9. System zur Ausführung eines zusammengesetzten Gebührenerfassungsdienstes, das durch eine Dienstzusammensetzungsmaschine (110) und eine Gebührenerfassungsmaschine (120) gebildet wird, wobei eine Gebührenerfassungssteuervorrichtung (130) nach Anspruch 8 im System angeordnet ist.

10. Dienstzusammensetzungsmaschine, wobei eine Gebührenerfassungssteuervorrichtung nach Anspruch 8 in der Zusammensetzungsmaschine angeordnet ist.

## Revendications

1. Procédé pour mettre en oeuvre un service de facturation combiné dans un service combiné, dans lequel le service combiné est une combinaison de services formée d'une pluralité de services de base, le procédé comprenant les étapes suivantes :
recevoir (304) des informations de demande de facturation provenant d'un service de base ;
exécuter (307) un processus de coordination de services sur les informations de demande de facturation reçues du service de base conformément aux caractéristiques de facturation de chaque service de base ;
régénérer des informations de demande de facturation combinant les caractéristiques de facturation de chaque service de base ; et
envoyer (308) les informations de demande de facturation régénérées à un moteur de facturation ;
le procédé étant **caractérisé en ce que**, avant la réception des informations de demande de facturation du service de base, le procédé comprend en outre les étapes suivantes :
générer (301) un identifiant, ID, de coordination de facturation, un ID de corrélation, un ID d'entité de coordination, et une instance de point de contrôle de facturation ;
établir une relation d'association entre l'ID de corrélation et l'instance de point de contrôle de facturation et une relation d'association entre l'ID de corrélation et une instance d'exécution de service combiné ; et
initier (302) une opération de demande vers chaque service de base, où des informations de l'opération de demande comprennent l'ID de coordination de facturation, l'ID de corrélation, et l'ID d'entité de coordination,
l'ID de coordination de facturation est configuré pour représenter ce dont le processus de coordination de service a besoin pour être exécuté sur le service de base demandé et comment exécuter le processus de coordination ;
l'ID de corrélation est configuré pour identifier l'instance de point de contrôle de service et l'instance d'exécution de service combiné ayant la relation d'association avec le service de base ;
l'ID d'entité de coordination est configuré pour notifier le service de base de l'entité de coordination à laquelle les informations de demande de facturation doivent être envoyées ; et
l'instance de point de contrôle de service est configurée pour identifier l'instance d'exécution de service combiné correspondant au service de base, et identifier une session de facturation entre le service de base et un moteur en ligne.

2. Procédé selon la revendication 1, dans lequel les informations de demande de facturation comprennent un ID de session de facturation, des informations de facturation du service de base, des informations du type de message de demande de facturation, des informations du type d'une entité envoyant un message de demande de facturation ; et
lorsque le message de demande de facturation est un message de demande de facturation initial, l'ID de session de facturation comprend l'ID de corrélation.

3. Procédé selon la revendication 2, dans lequel l'exécution du processus de coordination de service sur les informations de demande de facturation reçues provenant du service de base conformément aux caractéristiques de facturation de chaque service de base, et la régénération des informations de demande de facturation combinant les caractéristiques de facturation de chaque service de base, comprennent les étapes suivantes :
acquérir (305) l'instance de point de contrôle de facturation et l'instance d'exécution de service combiné ayant la relation d'association avec l'ID de corrélation ou l'ID de session de facturation conformément à l'ID de corrélation ou à l'ID de session de facturation ;
convertir (306) le message de demande de facturation en informations d'événement conformément aux informations du type de message de demande de facturation et aux informations du type de l'entité envoyant un message de demande de facturation ; et
faire correspondre (307) les informations d'événement, et après exécution réussie de l'opération de correspondance, exécuter le processus de coordination de service sur les informations de demande de facturation par l'intermédiaire d'au moins un parmi un code logique d'entrée externe, un code logique stocké et un code logique assigné par l'instance d'exécution de service combiné, et régénérer les informations de demande de facturation en combinant les caractéristiques de facturation de chaque service de base.

4. Procédé selon la revendication 3, dans lequel l'acquisition de l'instance de point de contrôle de facturation et de l'instance d'exécution de service combiné, ayant la relation d'association avec l'ID de corrélation ou l'ID de session de facturation conformément à l'ID de corrélation ou à l'ID de session de facturation , comprend les étapes suivantes :
acquérir l'instance de point de contrôle de facturation et l'instance d'exécution de service combiné ayant la relation d'association avec l'ID de corrélation conformément à l'ID de corrélation dans l'ID de session de facturation, si le message de demande de facturation est le message de demande de facturation initial, et établir la relation d'association entre l'ID de session de facturation et l'instance de point de contrôle de facturation et la relation d'association entre l'ID de session de facturation et l'instance d'exécution de service combiné ; et
acquérir l'instance de point de contrôle de facturation et l'instance d'exécution de service combiné ayant la relation d'association avec l'ID de session de facturation conformément à l'ID de session de facturation, si le message de demande de facturation est un message de demande de facturation non initial.

5. Procédé selon la revendication 3, dans lequel les informations d'événement comprennent des informations de nom d'événement et une instance de point de contrôle de service de l'événement.

6. Procédé selon la revendication 1, dans lequel l'exécution du processus de coordination de service comprend l'étape suivante :
exécuter au moins une opération parmi une opération de modification, une opération de suppression, et une opération d'ajout sur les informations de demande de facturation.

7. Procédé selon la revendication 2, dans lequel après l'envoi des informations de demande de facturation régénérées au moteur de facturation, le procédé comprend en outre les étapes suivantes :
recevoir (309), par l'intermédiaire du moteur de facturation, les informations de demande de facturation, enregistrer l'ID de session de facturation dans les informations de demande de facturation, et retourner les informations de réponse de facturation ;
recevoir (310) les informations de réponse de facturation retournées par le moteur de facturation ; et
envoyer (311) les informations de réponse de facturation au service de base.

8. Appareil de contrôle de facturation pour mettre en oeuvre un service de facturation combiné pour un service combiné, dans lequel le service combiné est une combinaison de services formée d'une pluralité de services de base, l'appareil comprenant :
une unité de réception d'informations de facturation (133), configurée pour recevoir des informations de demande de facturation provenant d'un service de base ;
un coordinateur (134), configuré pour exécuter un processus de coordination de services sur les informations de demande de facturation reçues reçues du service de base conformément aux caractéristiques de facturation de chaque service de base, et pour régénérer des informations de demande de facturation combinant les caractéristiques de facturation de chaque service de base ; et
une unité d'envoi d'informations de facturation (135), configurée pour envoyer les informations de demande de facturation régénérées à un moteur de facturation ; et
l'appareil est **caractérisé en ce qu'**il comprend en outre :
une unité de génération d'instance et d'identifiant (131), configurée pour générer un ID de coordination de facturation, un ID de corrélation, un ID d'entité de coordination, et une instance de point de contrôle de facturation ; et
le coordinateur (134) est en outre configuré pour établir une relation d'association entre l'ID de corrélation et l'instance de point de contrôle de facturation et une relation d'association entre l'ID de corrélation et une instance d'exécution de service combiné dans un moteur de composition de service ;
une unité de demande de service de base (132), configurée pour initier une opération de demande vers chaque service de base, où des informations de l'opération de demande comprennent l'ID de coordination de facturation, l'ID de corrélation, et l'ID d'entité de coordination ;
l'ID de coordination de facturation est configuré pour représenter ce dont le processus de coordination de service a besoin pour être exécuté sur le service de base demandé et comment exécuter le processus de coordination ;
l'ID de corrélation est configuré pour identifier l'instance de point de contrôle de service et l'instance d'exécution de service combiné ayant la relation d'association avec le service de base ;
l'ID d'entité de coordination est configuré pour notifier le service de base de l'entité de coordination à laquelle les informations de demande de facturation doivent être envoyées ; et
l'instance de point de contrôle de service est configurée pour identifier l'instance d'exécution de service combiné correspondant au service de base, et identifier une session de facturation entre le service de base et un moteur en ligne.

9. Système pour mettre en oeuvre un service de facturation combiné, formé d'un moteur de composition de service (110) et d'un moteur de facturation (120), où un appareil de contrôle de facturation (130) selon la revendication 8 est installé dans le système.

10. Moteur de composition de service, dans lequel un appareil de contrôle de facturation selon la revendication 8 est installé dans le moteur de composition.
